# EUROPEAN PATENT SPECIFICATION

(11) **EP 3 894 177 B1**
(45) Date of publication and mention of the grant of the patent: **19.10.2022**
(21) Application number: 20718121.5
(22) Date of filing: 26.03.2020
(51) Int. Cl.: B29C 49/48, B29C 49/56, B29C 49/06, B29C 49/12, B29C 49/36

(54) **A MOULD FOR MOULDING A CONTAINER STARTING FROM A PARISON MADE OF THERMOPLASTIC MATERIAL AND MOULDING PROCESS THEREOF**
FORM ZUM FORMEN EINES BEHÄLTERS AUSGEHEND VON EINEM VORFORMLING AUS THERMOPLASTISCHEM MATERIAL UND FORMVERFAHREN DAFÜR
MOULE POUR MOULER UN RÉCIPIENT À PARTIR D'UNE PARAISON EN MATIÈRE THERMOPLASTIQUE ET SON PROCÉDÉ DE MOULAGE

(30) Priority: 24.05.2019 IT 201900007220
(43) Date of publication of application: 20.10.2021
(73) Proprietor: Gea Procomac S.p.A., 43038 Sala Baganza (PR) (IT)
(72) Inventor: ABELLI, Paolo, 43038 Sala Baganza (Parma) (IT); PARROZZANI, Marco, 43038 Sala Baganza (Parma) (IT)
(74) Representative: Dondi, Silvia
(86) International application number: PCT/IB2020/052863
(87) International publication number: WO 2020/240286

(56) References cited:
- DE-A1- 2 028 009
- US-A- 6 099 286
- US-A1- 2004 013 762
- US-A1- 2015 042 002

## Description

### Technical field

The present invention relates to a mould for moulding a container starting from a parison made of thermoplastic material and the associated moulding process.

In particular, the invention has application in the sector of the moulding of containers made of plastic material, such as PET bottles, for example with aseptic technology. Related moulds and moulding methods are described in documents US2015/042002A and US6099286A.

### Background art

As is well known, in a stretch blow moulding process, parisons are heated and made to advance towards a stretch blow apparatus having a plurality of moulding stations.

In each moulding station there is a mould consisting of two half-moulds that reproduce the shape of the sides of the container to be obtained. At one of the bases of the mould there is usually an element for shaping the base of the container, known in the sector by the term "bottom", which engages with the half-moulds so as to define a moulding cavity.

Once the parison has been inserted into the cavity of the mould, the two half-moulds are brought close together and are kept closed by a mechanical locking system.

A blowing or sealing nozzle is brought near the neck of the parison and hermetically seals the mouth of the latter. Pressurised air is blown through the nozzle into the parison.

In particular, during a first step, known as the pre-blowing step, air is injected at a maximum pressure of about 16 bar.

A stretch rod, slidable inside the blowing nozzle, is progressively introduced into the parison until reaching the base. After touching the base, the stretch rod further continues its linear stroke, during which the tubular body of the parison is stretched until the latter substantially reaches the length of the container to be obtained.

In a second step, known as the blowing step, the air is injected at a maximum pressure of about 40 bar, thus determining the expansion of the parison until it adheres to the inner walls of the half-moulds and the bottom. Simultaneously, the stretch rod starts being withdrawn until coming out of the container. At the end, the injected air is maintained inside the container for a few moments so as to consolidate the moulding thereof.

The air is subsequently discharged through the blowing nozzle so as to bring the inside of the container back to atmospheric pressure, and then the container itself is removed from the mould.

During the pre-blowing and blowing steps, the two half-moulds are subjected to very high pressures which can cause deformations in the mould itself and result in evident defects in the shapes of the finished container, in which the dividing plane generated by the two half-moulds brought together is perceptible by sight and to the touch. The simple mould locking system is not enough to compensate for such deformations. For this reason, systems have been developed to compensate for the mechanical deformations of the mould which, at least during the blowing step, apply on one of the two half-moulds a closing force that compensates for the blowing pressure.

The closing force is applied by introducing a fluid under pressure, for example compressed air, into a confined chamber between one of the two half-moulds and the respective mechanical support (for example the mould holder).

The known compensation systems, however, have several drawbacks. First of all, they require a certain number of additional components (e.g. valves and pilot systems thereof), thus increasing the structural complexity of the system and the overall consumption.

Moreover, the compensating force is calibrated in a fixed manner so as to compensate for the maximum value of the force exerted by the blowing fluid inside the parison/container. The maximum value of said force is imposed by the largest size processed by the system.

When the size of the container is modified, for example when switching to containers with a smaller capacity, the set compensating force proves to be excessive relative to the force actually exerted by the fluid injected into the container. This causes great strain on the components, which accelerates the wear thereof, and a higher consumption of air than the process requires.

There is already a known solution in which the compensating force is modulated differently on some areas of the container, each managed through its own compensating chamber.

However, this is not an efficient solution, since the compensating force is still set in a fixed manner, albeit for distinct thresholds depending on the areas (e.g. mouth - central area of the tubular body - base). Furthermore, the complexity is even increased, because additional valves are necessary to control the supply to the various compensating chambers.

Finally, in the case of non-concentric seals, the compensating force might not be centred with the thrust exerted by the blowing fluid on the inner walls of the container.

### Disclosure of the invention

In this context, the technical task at the basis of the present invention is to propose a mould for moulding a container starting from a parison made of thermoplastic material and a moulding process for moulding containers which overcome the above-mentioned drawbacks of prior art.

In particular, an object of the present invention is to propose a mould for moulding a container starting from a parison made of thermoplastic material, the mould being capable of implementing an efficient compensation for the mechanical deformations of the mould during blowing, for the various sizes of containers that may be processed by said mould.

Another object of the present invention is to provide a mould for moulding a container starting from a parison made of thermoplastic material, the mould being capable of compensating for the mechanical deformations of the mould during blowing with a lesser degree of structural complexity than the known solutions.

Another object of the present invention is to provide a process for moulding a container starting from parisons made of thermoplastic material, wherein the compensation for the mechanical deformations of moulds during blowing is carried out in a more efficient and simpler manner compared to known solutions.

The stated technical task and specified objects are substantially achieved by a mould for moulding a container starting from a parison made of thermoplastic material, comprising:
- a first half-mould and a second half-mould that can be brought together to define at least one housing cavity for housing the parison and the moulded container;
- a first circuit configured to inject a blowing fluid into the parison;
- a compensating chamber for compensating the mechanical deformations and plays of the half-moulds;
- a second circuit for supplying the compensating chamber, the second circuit comprising at least one valve configurable in an open position for a time interval during which it allows the fluid communication of a supply line the blowing fluid with the compensating chamber,
**characterised in that** the second circuit further comprises:
- a pressure sensor configured to detect a first signal representing the pressure of the blowing fluid present in the compensating chamber;
- a control unit which, in response to the first signal detected, is configured to retroactively regulate the time interval during which the valve is in the open position.

Preferably, the control unit is configured to:
- increase the time interval (during which the valve is in the open position), in response to values of the first signal that are lower than a first threshold;
- reduce the time interval, in response to values of the first signal that are higher than a second threshold;
- keep the time interval unchanged in response to values of the first signal that are comprised between the first threshold and the second threshold.

Preferably, the control unit is further configured to keep the time interval higher than a minimum value and lower than a maximum value.

In accordance with one embodiment, the pressure sensor is operatively active on the compensating chamber.

In accordance with one embodiment, the mould also comprises a first support to which the first half-mould is integrally constrained and a second support to which the second half-mould is integrally constrained.

The compensating chamber is preferably obtained between the first support and the first half-mould.

Preferably, the mould also comprises an arm that is rotatable about a hinge axis. The first support is integrally constrained to said arm and the compensating chamber is obtained between the first support and the arm. In accordance with one embodiment, the compensating chamber has at least one inlet for the blowing fluid coming from the second circuit and an outlet for evacuating the blowing fluid.

In accordance with one embodiment, the pressure sensor is located downstream of the valve of the second circuit with respect to the path of the blowing fluid.

The stated technical task and specified objects are substantially achieved by a moulding process for moulding containers starting from parisons made of thermoplastic material, comprising the steps of:
- arranging a parison in a housing cavity obtained by bringing together a first half-mould and a second half-mould of a mould;
- injecting a blowing fluid at medium pressure into the parison;
- injecting a blowing fluid at high pressure into the parison;
- opening a valve that allows the fluid communication of a supply line for supplying the blowing fluid with a compensating chamber for compensating the mechanical deformations and plays of the half-moulds so as to introduce the blowing fluid into the compensating chamber;
- keeping the valve open for a time interval;
- detecting a first signal representing the pressure of the blowing fluid in the compensating chamber;
- in response to the first signal detected, retroactively regulating the time interval during which the valve remains open;
- evacuating the blowing fluid from the moulded container;
- evacuating the blowing fluid from the compensating chamber;
- removing the moulded container from the housing cavity.

In accordance with one embodiment, the step of opening the valve takes place before the step of injecting the blowing fluid at medium pressure into the parison.

In accordance with another embodiment, the step of opening the valve takes place after having injected the blowing fluid at medium pressure and before injecting the blowing fluid at high pressure into the parison.

In accordance with one embodiment, the step of retroactively regulating the time interval takes place in response to the first signal detected in a same moulding cycle of the same parison.

In accordance with another embodiment, the step of retroactively regulating the time interval takes place after having removed the moulded container from the housing cavity.

Preferably, the step of retroactively regulating the time interval comprises:
- increasing the time interval, in response to values of the first signal that are lower than a first threshold;
- reducing the time interval in response to values of the first signal that are higher than a second threshold;
- keeping the time interval unchanged in response to values of the first signal that are comprised between the first threshold and the second threshold.

### Brief description of drawings

Additional features and advantages of the present invention will be more apparent from the approximate, and thus non-limiting, description of a preferred but non-exclusive embodiment of a mould for moulding a container starting from a parison made of thermoplastic material and a moulding process for moulding containers, as illustrated in the accompanying drawings, in which:
- figure 1 schematically illustrates a mould for moulding a container starting from a parison made of plastic material, according to the present invention;
- figure 2 illustrates a cross section of a variant embodiment of the mould in figure 1;
- figure 3 illustrates a graph of the pattern, over time, of the pressure of the blowing fluid in the compensating chamber of the mould in figure 1.

### Detailed description of preferred embodiments of the invention

With reference to the figures, the number 1 indicates a mould 1 for moulding a container starting from a parison 100 made of thermoplastic material.

The mould 1 comprises a first half-mould 1a and a second half-mould 1b that can be brought together to define at least one housing cavity 2 for housing the parison 100 or the moulded container.

The mould 1 further comprises a first support 7a to which the first half-mould 1a is integrally constrained and a second support 7b to which the second half-mould 1b is integrally constrained.

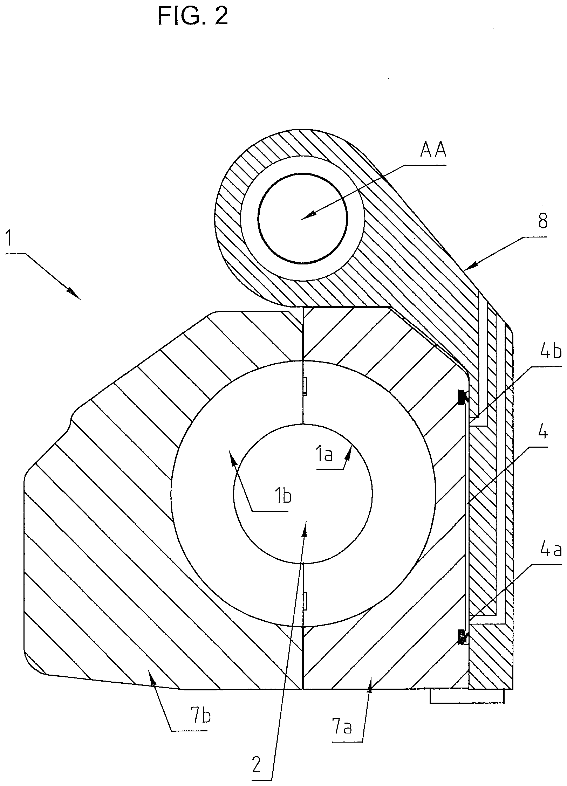

Preferably, the mould 1 has a fixed support and another movable support. For example, figure 2 illustrates a mould 1 which also comprises an arm 8 that is rotatable about a hinge axis AA. The movable support in this case is 7a which, being integrally constrained to the arm 8, rotates therewith, whereas the fixed support is 7b.

Alternatively, both of the supports 7a, 7b (and the respective half-moulds 1a, 1b, integral therewith) can rotate about a common hinge axis so that the mould 1 is of the "hinged" type.

In another variant embodiment, the mould 1 is of the "linear" type, i.e. the supports (and the respective half-moulds integral therewith) are mutually brought towards and away from each other by shifting.

Preferably, the mould 1 comprises a bottom 9, which cooperates with the half-moulds 1a, 1b to mould the base of the container.

A blowing fluid is injected into the parison 100 through a first circuit 3, which is configured to establish a selective communication between a supply line 52 for supplying the blowing fluid and the inside of the parison 100.

The mould 1 further comprises a compensating chamber 4 for compensating the mechanical deformations and plays of the half-moulds 1a, 1b.

The compensating chamber 4 is supplied by a second circuit 5 comprising at least one valve 51 configured to establish a selective communication between the supply line 52 for supplying the blowing fluid and the compensating chamber 4.

In particular, the valve 51 is controlled by a control signal S, which determines the opening or closing thereof.

In accordance with the embodiment illustrated in figure 2, the compensating chamber 4 is obtained between the first support 7a (movable) and the arm 8.

In accordance with an alternative embodiment (not illustrated), the compensating chamber 4 is obtained between the first support 7a and the first half-mould 1a.

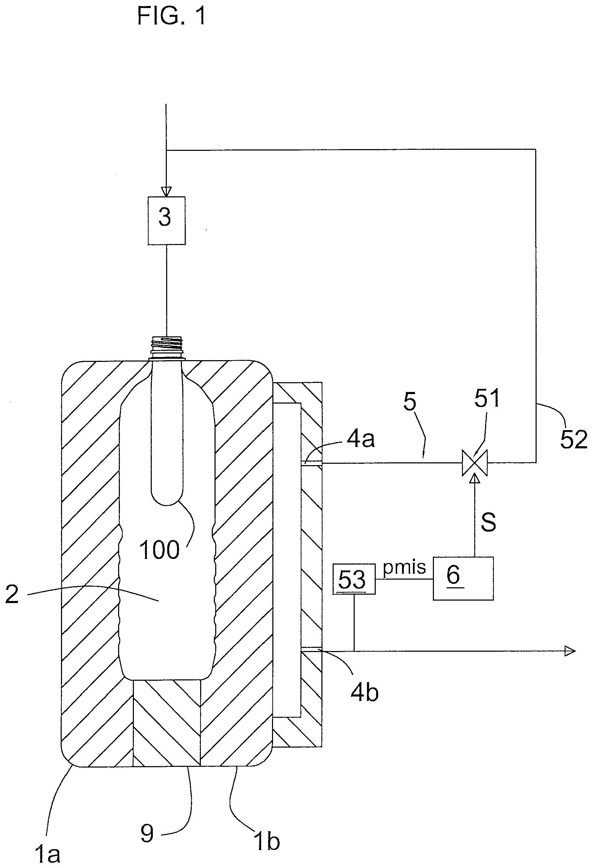

In the embodiment illustrated in figure 1, the compensating chamber 4 has at least one inlet 4a and an outlet 4b, respectively for the introduction and evacuation of the blowing fluid.

The inlet 4a of the compensating chamber 4 receives the blowing fluid when the valve 51 is in an open position.

In an unillustrated variant embodiment, a single inlet/outlet channel to/from the compensating chamber 4 is provided in order to introduce and evacuate the blowing fluid.

Advantageously, the second circuit 5 further comprises:
- a pressure sensor 53 configured to detect a first signal pₘᵢₛ representing the pressure of the blowing fluid present in the compensating chamber 4;
- a control unit 6 which, in response to the first signal pₘᵢₛ detected, is configured to retroactively regulate the opening of the valve 51.

In the embodiment of figure 1, the pressure sensor 53 is operatively active on a line in fluid communication with the outlet 4b of the compensating chamber.

In accordance with another embodiment (not illustrated), the pressure sensor 53 is operatively active on a line in fluid communication with the inlet 4a of the compensating chamber. In other words, the pressure sensor 53 is located downstream of the valve 51 with respect to the path of the blowing fluid.

In accordance with another embodiment (not illustrated), the pressure sensor 53 is located in proximity of the mould 1 and is operatively active on the compensating chamber 4.

In this context, Tₒₚₑₙ indicates the time interval during which the valve 51 is in the open position, so that it allows the fluid communication of the supply line 52 for supplying the blowing fluid with the compensating chamber 4. The control unit 6 enables the opening interval Tₒₚₑₙ of the valve 51 to be regulated in such a way that the pressure of the blowing fluid inside the compensating chamber 4 is kept between two thresholds: a first threshold pₜₕ₁ (also indicated herein as the "lower threshold") and a second threshold pₜₕ₂ (also indicated herein as the "upper threshold").

The regulation is carried out in response to the first signal pₘᵢₛ detected by the pressure sensor 53.

In particular, if a value of the first signal pₘᵢₛ below the lower threshold pₜₕ₁ is detected, the control unit 6 is configured to increase the time interval Tₒₚₑₙ during which the valve 51 must remain open.

In fact, if the valve 51 is left open for a longer time, the pressure of the blowing fluid in the compensating chamber 4 will increase.

If the increase is such that the time interval Tₒₚₑₙ would exceed a maximum value Tₘₐₓ, the time interval Tₒₚₑₙ will be forced to take on that maximum value Tₘₐₓ. Practically speaking, there is a higher saturation of the time interval Tₒₚₑₙ at the maximum value T_{max.} A maximum value of the pressure pₘₐₓ corresponds to the maximum time value.

If, on the contrary, a value of the first signal pₘᵢₛ above the upper threshold pₜₕ₂ is detected, the control unit 6 is configured to reduce the time interval Tₒₚₑₙ during which the valve 51 must remain open.

In fact, decreasing the opening time of the valve 51 will decrease the pressure of the blowing fluid in the compensating chamber 4.

If the decrease is such that the time interval Tₒₚₑₙ would go below a minimum value Tₘᵢₙ, the time interval Tₒₚₑₙ will be forced to take on that minimum value Tₘᵢₙ. Practically speaking, there is a lower saturation of the time interval Tₒₚₑₙ at the minimum value Tₘᵢₙ.

That minimum time value corresponds to a minimum pressure value pₘᵢₙ. If, by contrast, a value of the first signal pₘᵢₛ comprised between the lower threshold pₜₕ₁ and the upper threshold pₜₕ₂ (or, possibly, equal to one or the other of said thresholds) is detected, the control unit 6 will maintain the time interval Tₒₚₑₙ constant. In fact, in the latter case, the pressure of the blowing fluid in the compensating chamber 4 is comprised within a desired range (between the two thresholds) and it will not be necessary to vary the duration of opening of the valve 51.

The mould 1 proposed herein can be used in an aseptic moulding apparatus, such as the one described in European patent EP2246176.

In such a case, the valve 51 is an aseptic valve. For example, a membrane valve can be used.

The moulding process for moulding containers starting from parisons made of thermoplastic material, according to the present invention, is described below.

Let us consider an i-th moulding cycle, in which the mould 1 receives a parison 100 to be subjected to moulding.

The parison 100 occupies the housing cavity 2 of the mould 1.

The blowing fluid is injected into the parison 100.

Preferably, two injection steps may be distinguished (from two distinct supply lines):
- a "pre-blowing" step, in which the blowing fluid is injected into the parison 100 at medium pressure (coming from a first line), that is, between 15 bar and 20 bar;
- an actual "blowing" step, during which the blowing fluid is injected into the parison 100 at high pressure, that is, between 30 bar and 45 bar (coming from a second line).

Figure 1 illustrates a single supply line 52, into which the first supply line (for the fluid at medium pressure) and the second supply line (for the fluid at high pressure) preferably converge by means of a suitable valve system of a known type.

The blowing fluid is also injected into the compensating chamber 4.

For this purpose, the opening command S is sent to the valve 51. The command S has a certain duration, which corresponds to the time interval Tₒₚₑₙ that was previously defined.

The pressure sensor 53 detects the first signal pₘᵢₛ representing the pressure of the blowing fluid in the compensating chamber 4.

The first signal pₘᵢₛ is sent to the control unit 6, which performs the retroactively regulation of the duration of the opening command S, i.e. of the time interval Tₒₚₑₙ during which the valve 51 remains open.

As previously indicated above, such regulation can result in an increase, or reduction or no change in the duration of the opening command.

The regulation may regard the cycle in progress (i-th) or the next cycle (i+1 - th), depending on the response times of the first circuit 3 and the second circuit 5.

In fact, the response of the two circuits 3, 5 depends on the elements making it up, in particular the pressure sensor 53, the delay in the opening of the valve 51 and the delay in the opening of the first circuit 3 (which comprises at least one valve in order to establish selective communication between the supply line 52 and the inside of the parison 100).

In the first case (cycle in progress), the regulation is verified prior to the blowing of the parison 100. In this first case, the second circuit 5 has, in fact, response times that are shorter on the whole compared to those of the first circuit 3. For example, the valve 51 opens before the valve of the first circuit 3, so the first signal pₘᵢₛ detected by the pressure sensor 53 is able to be received and processed by the control unit 6 and implement the regulation of the command signal S before blowing the parison 100.

In the second case (next cycle i+1), first the cycle in progress is completed by evacuating the blowing fluid from the moulded container and removing the moulded container from the housing cavity 2.

The next cycle provides for the insertion of a new parison 100 into the housing cavity 2 and the injection of the blowing fluid at the regulated pressure into the compensating chamber 4.

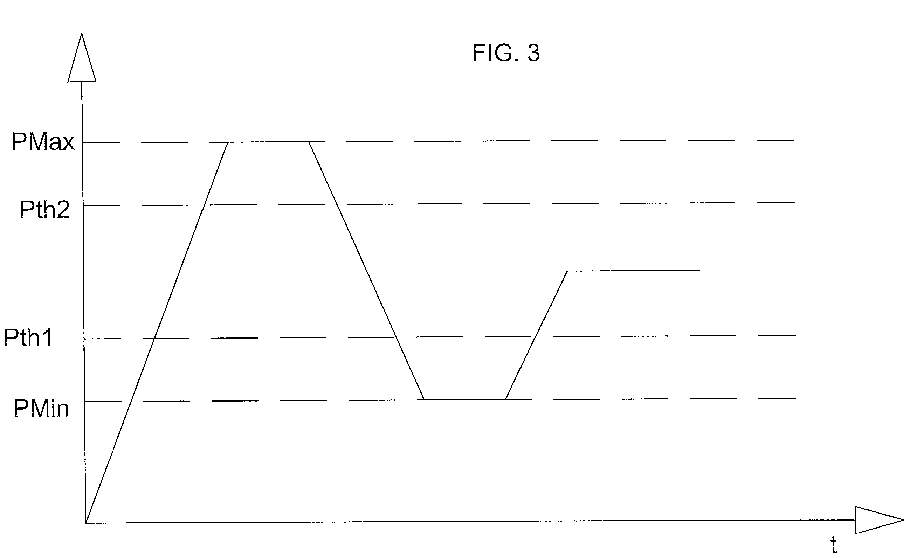

The increase/decrease in the pressure of the blowing fluid in the compensating chamber 4 (via the regulation of the open interval Tₒₚₑₙ) can thus take place over a number of cycles, until a value is reached in the range between the two thresholds pₜₕ₁, pₜₕ₂, as illustrated in figure 3. Based on the description provided, the features of the mould for moulding a container starting from a parison made of thermoplastic material and the moulding process for moulding containers, according to the present invention appear clear, as do the advantages thereof.

In particular, thanks to the regulation of the opening time of the valve that controls the injection of the blowing fluid into the compensating chamber, it is possible to modulate the pressure of the fluid according to the size of the container, thus avoiding excessive stresses on the systems for closing the mould.

Furthermore, unlike known solutions, therefore, the pressure of the fluid in the compensating chamber is not fixed or set at discrete values, but rather continuously regulated according to a retroactively logic that allows the consumption of air and wear of the components to be reduced.

The proposed solution further makes it possible to reduce the structural complexity compared to the prior art by using different compensating chambers to vary the area of thrust according to the container.

## Claims

1. A mould (1) for moulding a container starting from a parison (100) made of thermoplastic material, comprising:
- a first half-mould (1a) and a second half-mould (1b) that can be brought together to define at least one housing cavity (2) for housing the parison (100) and the moulded container;
- a first circuit (3) configured to inject a blowing fluid into the parison (100);
- a compensating chamber (4) for compensating the mechanical deformations and plays of said half-moulds (1a, 1b);
- a second circuit (5) for supplying the compensating chamber (4), the second circuit (5) comprising at least one valve (51) configurable in an open position for a time interval (Tₒₚₑₙ) during which the valve (51) allows the fluid communication of a supply line (52) for supplying the blowing fluid with the compensating chamber (4),
**characterised in that** said second circuit (5) further comprises:
- a pressure sensor (53) configured to detect a first signal (pₘᵢₛ) representing the pressure of the blowing fluid present in said compensating chamber (4);
- a control unit (6) which, in response to said first signal (pₘᵢₛ) detected, is configured to retroactively regulate said time interval (Tₒₚₑₙ) during which said at least one valve (51) is in the open position.

2. The mould (1) according to claim 1, wherein said control unit (6) is configured to:
- increase said time interval (Tₒₚₑₙ) in response to values of the first signal (pₘᵢₛ) that are lower than a first threshold (Pₜₕ₁);
- reduce said time interval (Tₒₚₑₙ) in response to values of the first signal (pₘᵢₛ) that are higher than a second threshold (Pₜₕ₂);
- keep said time interval (Tₒₚₑₙ) unchanged in response to values of the first signal (pₘᵢₛ) that are comprised between said first threshold (Pₜₕ₁) and said second threshold (Pₜₕ₂).

3. The mould (1) according to claim 1 or 2, wherein said control unit (6) is further configured to keep the time interval (Tₒₚₑₙ) higher than a minimum value (Tmin) and lower than a maximum value (Tmax).

4. The mould (1) according to any one of the preceding claims, wherein said pressure sensor (53) is operatively active on the compensating chamber (4).

5. The mould (1) according to any one of the preceding claims, further comprising a first support (7a) to which said first half-mould (1a) is integrally constrained and a second support (7b) to which said second half-mould (1b) is integrally constrained.

6. The mould (1) according to claim 5, wherein said compensating chamber (4) is obtained between said first support (7a) and said first half-mould (1a).

7. The mould (1) according to claim 5, further comprising an arm (8) that is rotatable about a hinge axis (AA), said first support (7a) being integrally constrained to said arm (8) and said compensating chamber (4) being obtained between said first support (7a) and said arm (8).

8. The mould (1) according to any one of the preceding claims, wherein said compensating chamber (4) has at least one inlet (4a) for the blowing fluid coming from said second circuit (5) and an outlet (4b) for evacuating said blowing fluid.

9. The mould (1) according to claim 8, wherein said pressure sensor (53) is located downstream of said at least one valve (51) with respect to the path of the blowing fluid.

10. A moulding process for moulding containers starting from parisons (100) made of thermoplastic material, comprising the steps of:
- arranging a parison (100) in a housing cavity (2) obtained by bringing together a first half-mould (1a) and a second half-mould (1b) of a mould (1);
- injecting a blowing fluid at medium pressure into the parison (100);
- injecting a blowing fluid at high pressure into the parison (100);
- opening a valve (51) which allows the fluid communication of a supply line (52) for supplying the blowing fluid with a compensating chamber (4) for compensating the mechanical deformations and plays of said half-moulds (1a, 1b) so as to introduce the blowing fluid into said compensating chamber (4);
- keeping said valve (51) open for a time interval (Tₒₚₑₙ);
- detecting a first signal (pₘᵢₛ) representing the pressure of the blowing fluid present in said compensating chamber (4);
- in response to said first signal (pₘᵢₛ) detected, retroactively regulating said time interval (Tₒₚₑₙ) during which the valve (51) remains open;
- evacuating the blowing fluid from the moulded container;
- evacuating the blowing fluid from the compensating chamber (4);
- removing the moulded container from the housing cavity (2).

11. The moulding process according to claim 10, wherein the step of opening said valve (51) takes place before the step of injecting the blowing fluid at medium pressure into the parison (100) or after having injected the blowing fluid at medium pressure and before injecting the blowing fluid at high pressure into the parison (100).

12. The moulding process according to claim 10 or 11, wherein the step of retroactively regulating said time interval (Tₒₚₑₙ) takes place in response to the first signal (pₘᵢₛ) detected in a same moulding cycle of the parison (100).

13. The moulding process according to claim 10 or 11, wherein the step of retroactively regulating said time interval (Tₒₚₑₙ) takes place after having removed the moulded container from the housing cavity (2).

14. The moulding process according to any one of claims 10 to 13, wherein the step of retroactively regulating said time interval (Tₒₚₑₙ) comprises:
- increasing said time interval (Tₒₚₑₙ) in response to values of the first signal (pₘᵢₛ) that are lower than a first threshold (Pₜₕ₁);
- reducing said time interval (Tₒₚₑₙ) in response to values of the first signal (pₘᵢₛ) that are higher than a second threshold (Pₜₕ₂);
- keeping said time interval (Tₒₚₑₙ) unchanged in response to values of the first signal (pₘᵢₛ) that are comprised between said first threshold (Pₜₕ₁) and said second threshold (pth2).

## Patentansprüche

1. Form (1) zum Formen eines Behälters ausgehend von einem Vorformling (100) aus thermoplastischem Material, umfassend:
- eine erste Halbform (1a) und eine zweite Halbform (1b), die zusammengebracht werden können, um mindestens einen Aufnahmehohlraum (2) zum Aufnehmen des Vorformlings (100) und des geformten Behälters zu definieren;
- einen ersten Kreislauf (3), der dazu ausgelegt ist, ein Blasfluid in den Vorformling (100) einzuspritzen;
- eine Kompensationskammer (4) zum Kompensieren der mechanischen Verformungen und Spiele der Halbformen (1a, 1b);
- einen zweiten Kreislauf (5) zum Versorgen der Kompensationskammer (4), wobei der zweite Kreislauf (5) mindestens ein Ventil (51) umfasst, das in einer offenen Position für ein Zeitintervall (Tₒₚₑₙ) ausgelegt werden kann, während dessen das Ventil (51) die Fluidverbindung einer Versorgungsleitung (52) zum Versorgen des Blasfluids mit der Kompensationskammer (4) ermöglicht,
**dadurch gekennzeichnet, dass** der zweite Kreislauf (5) ferner umfasst:
- einen Drucksensor (53), der dazu ausgelegt ist, ein erstes Signal (pₘᵢₛ) zu erfassen, das den Druck des in der Kompensationskammer (4) vorhandenen Blasfluids darstellt;
- eine Steuereinheit (6), die als Reaktion auf das erfasste erste Signal (pₘᵢₛ) ausgelegt ist, um das Zeitintervall (Tₒₚₑₙ), während dessen sich das mindestens eine Ventil (51) in der offenen Position befindet, rückwirkend zu regulieren.

2. Form (1) nach Anspruch 1, wobei die Steuereinheit (6) ausgelegt ist, zum:
- Erhöhen des Zeitintervalls (Tₒₚₑₙ) als Reaktion auf Werte des ersten Signals (pₘᵢₛ), die niedriger als ein erster Schwellenwert (Pₜₕ₁) sind;
- Reduzieren des Zeitintervalls (Tₒₚₑₙ) als Reaktion auf Werte des ersten Signals (pₘᵢₛ), die höher als ein zweiter Schwellenwert (Pₜₕ₂) sind;
- Halten des Zeitintervalls (Tₒₚₑₙ) als Reaktion auf Werte des ersten Signals (pₘᵢₛ), die zwischen dem ersten Schwellenwert (Pₜₕ₁) und dem zweiten Schwellenwert (Pₜₕ₂) enthalten sind, unverändert.

3. Form (1) nach Anspruch 1 oder 2, wobei die Steuereinheit (6) ferner ausgelegt ist, um das Zeitintervall (Tₒₚₑₙ) höher als ein Minimalwert (Tₘᵢₙ) und niedriger als ein Maximalwert (Tₘₐₓ) zu halten.

4. Form (1) nach einem der vorhergehenden Ansprüche, wobei der Drucksensor (53) an der Kompensationskammer (4) betriebswirksam ist.

5. Form (1) nach einem der vorhergehenden Ansprüche, ferner umfassend einen ersten Träger (7a), an dem die erste Halbform (1a) fest gebunden ist, und einen zweiten Träger (7b), an dem die zweite Halbform (1b) fest gebunden ist.

6. Form (1) nach Anspruch 5, wobei die Kompensationskammer (4) zwischen dem ersten Träger (7a) und der ersten Halbform (1a) erhalten wird.

7. Form (1) nach Anspruch 5, ferner umfassend einen Arm (8), der um eine Gelenkachse (AA) drehbar ist, wobei der erste Träger (7a) fest mit dem Arm (8) gebunden ist und die Kompensationskammer (4) zwischen dem ersten Träger (7a) und dem Arm (8) erhalten wird.

8. Form (1) nach einem der vorhergehenden Ansprüche, wobei die Kompensationskammer (4) mindestens einen Einlass (4a) für das Blasfluid, das vom zweiten Kreislauf (5) kommt, und einen Auslass (4b) zum Evakuieren des Blasfluids aufweist.

9. Form (1) nach Anspruch 8, wobei der Drucksensor (53) in Bezug auf den Weg des Blasfluids stromabwärts vom mindestens einen Ventil (51) angeordnet ist.

10. Formverfahren zum Formen von Behältern ausgehend von Vorformlingen (100) aus thermoplastischem Material, umfassend die Schritte:
- Anordnen eines Vorformlings (100) in einem Aufnahmehohlraum (2), der durch Zusammenbringen einer ersten Halbform (1a) und einer zweiten Halbform (1b) einer Form (1) erhalten wird;
- Einspritzen eines Blasfluids bei mittlerem Druck in den Vorformling (100);
- Einspritzen eines Blasfluids bei hohem Druck in den Vorformling (100);
- Öffnen eines Ventils (51), das die Fluidverbindung einer Versorgungsleitung (52) zum Versorgen des Blasfluids mit einer Kompensationskammer (4) zum Kompensieren der mechanischen Verformungen und Spiele der Halbformen (1a, 1b) ermöglicht, um das Blasfluid in die Kompensationskammer (4) einzuführen;
- Offenhalten des Ventils (51) für ein Zeitintervall (Tₒₚₑₙ);
- Erfassen eines ersten Signals (pₘᵢₛ), das den Druck des in der Kompensationskammer (4) vorhandenen Blasfluids darstellt;
- als Reaktion auf das erfasste erste Signal (pₘᵢₛ) rückwirkendes Regulieren des Zeitintervalls (Tₒₚₑₙ), während dessen das Ventil (51) offen bleibt;
- Evakuieren des Blasfluids aus dem geformten Behälter;
- Evakuieren des Blasfluids aus der Kompensationskammer (4);
- Entnehmen des geformten Behälters aus dem Aufnahmehohlraum (2).

11. Formverfahren nach Anspruch 10, wobei der Schritt zum Öffnen des Ventils (51) vor dem Schritt zum Einspritzen des Blasfluids bei mittlerem Druck in den Vorformling (100) oder nach dem Einspritzen des Blasfluids bei mittlerem Druck und vor dem Einspritzen des Blasfluids bei hohem Druck in den Vorformling (100) stattfindet.

12. Formverfahren nach Anspruch 10 oder 11, wobei der Schritt zum rückwirkenden Regulieren des Zeitintervalls (Tₒₚₑₙ) als Reaktion auf das erste Signal (pₘᵢₛ) stattfindet, das in einem gleichen Formzyklus des Vorformlings (100) erfasst wird.

13. Formverfahren nach Anspruch 10 oder 11, wobei der Schritt zum rückwirkenden Regulieren des Zeitintervalls (Tₒₚₑₙ) stattfindet, nachdem der geformte Behälter aus dem Aufnahmehohlraum (2) entfernt wurde.

14. Formverfahren nach einem der Ansprüche 10 bis 13, wobei der Schritt zum rückwirkenden Regulieren des Zeitintervalls (Tₒₚₑₙ) Folgendes umfasst:
- Erhöhen des Zeitintervalls (Tₒₚₑₙ) als Reaktion auf Werte des ersten Signals (pₘᵢₛ), die niedriger als ein erster Schwellenwert (Pₜₕ₁) sind;
- Reduzieren des Zeitintervalls (Tₒₚₑₙ) als Reaktion auf Werte des ersten Signals (pₘᵢₛ), die höher als ein zweiter Schwellenwert (Pₜₕ₂) sind;
- Halten des Zeitintervalls (Tₒₚₑₙ) als Reaktion auf Werte des ersten Signals (pₘᵢₛ), die zwischen dem ersten Schwellenwert (Pₜₕ₁) und dem zweiten Schwellenwert (Pₜₕ₂) enthalten sind, unverändert.

## Revendications

1. Moule (1) pour mouler un récipient à partir d'une paraison (100) en matière thermoplastique, comprenant :
- un premier demi-moule (1a) et un second demi-moule (1b) pouvant être rapprochés pour définir au moins une cavité de logement (2) pour loger la paraison (100) et le récipient moulé ;
- un premier circuit (3) configuré pour injecter un fluide de soufflage dans la paraison (100) ;
- une chambre de compensation (4) pour compenser les déformations mécaniques et les jeux desdits demi-moules (1a, 1b) ;
- un deuxième circuit (5) pour alimenter la chambre de compensation (4), le deuxième circuit (5) comprenant au moins une vanne (51) configurable dans une position d'ouverture pendant un intervalle de temps (Tₒₚₑₙ) pendant lequel la vanne (51) permet la communication fluidique d'une ligne d'alimentation (52) pour alimenter le fluide de soufflage avec la chambre de compensation (4),
**caractérisé en ce que** ledit deuxième circuit (5) comprend de plus :
- un capteur de pression (53) configuré pour détecter un premier signal (pₘᵢₛ) représentant la pression du fluide de soufflage présent dans ladite chambre de compensation (4) ;
- une unité de commande (6) qui, en réponse audit premier signal (pₘᵢₛ) détecté, est configurée pour régler rétroactivement ledit intervalle de temps (Tₒₚₑₙ) pendant lequel ladite au moins une vanne (51) se trouve dans la position d'ouverture.

2. Moule (1) selon la revendication 1, dans lequel ladite unité de commande (6) est configurée pour :
- augmenter ledit intervalle de temps (Tₒₚₑₙ) en réponse à des valeurs du premier signal (pₘᵢₛ) qui sont inférieures à un premier seuil (Pₜₕ₁) ;
- réduire ledit intervalle de temps (Tₒₚₑₙ) en réponse à des valeurs du premier signal (pₘᵢₛ) qui sont supérieures à un deuxième seuil (Pₜₕ₂) ;
- maintenir ledit intervalle de temps (Tₒₚₑₙ) inchangé en réponse à des valeurs du premier signal (pₘᵢₛ) étant comprises entre ledit premier seuil (Pₜₕ₁) et ledit second seuil (Pₜₕ₂).

3. Moule (1) selon la revendication 1 ou 2, dans lequel ladite unité de commande (6) est de plus configurée pour maintenir l'intervalle de temps (Tₒₚₑₙ) supérieur à une valeur minimale (Tₘᵢₙ) et inférieur à une valeur maximale (Tₘₐₓ).

4. Moule (1) selon l'une quelconque des revendications précédentes, dans lequel ledit capteur de pression (53) est actif de manière fonctionnelle sur la chambre de compensation (4).

5. Moule (1) selon l'une quelconque des revendications précédentes, comprenant de plus un premier support (7a) auquel ledit premier demi-moule (1a) est intégralement solidaire et un deuxième support (7b) auquel ledit deuxième demi-moule (1b) est intégralement solidaire.

6. Moule (1) selon la revendication 5, dans lequel ladite chambre de compensation (4) est obtenue entre ledit premier support (7a) et ledit premier demi-moule (1a).

7. Moule (1) selon la revendication 5, comprenant de plus un bras (8) pouvant tourner autour d'un axe d'articulation (AA), ledit premier support (7a) étant intégralement solidaire dudit bras (8) et ladite chambre de compensation (4) étant obtenue entre ledit premier support (7a) et ledit bras (8).

8. Moule (1) selon l'une quelconque des revendications précédentes, dans lequel ladite chambre de compensation (4) comporte au moins une entrée (4a) pour le fluide de soufflage provenant dudit deuxième circuit (5) et une sortie (4b) pour évacuer ledit fluide de soufflage.

9. Moule (1) selon la revendication 8, dans lequel ledit capteur de pression (53) est situé en aval de ladite au moins une vanne (51) par rapport au trajet du fluide de soufflage.

10. Procédé de moulage pour mouler des récipients à partir de paraisons (100) en matière thermoplastique, comprenant les étapes de :
- disposer une paraison (100) dans une cavité de logement (2) obtenue en regroupant un premier demi-moule (1a) et un deuxième demi-moule (1b) d'un moule (1) ;
- injecter un fluide de soufflage à moyenne pression dans la paraison (100) ;
- injecter un fluide de soufflage à haute pression dans la paraison (100) ;
- ouvrir une vanne (51) qui permet la communication fluidique d'une ligne d'alimentation (52) pour alimenter le fluide de soufflage avec une chambre de compensation (4) pour compenser les déformations mécaniques et les jeux desdits demi-moules (1a, 1b) afin d'introduire le fluide de soufflage dans ladite chambre de compensation (4) ;
- maintenir ladite vanne (51) ouverte pendant un intervalle de temps (Tₒₚₑₙ) ;
- détecter un premier signal (pₘᵢₛ) représentant la pression du fluide de soufflage présent dans ladite chambre de compensation (4) ;
- en réponse audit premier signal (pₘᵢₛ) détecté, régler rétroactivement ledit intervalle de temps (Tₒₚₑₙ) pendant lequel la vanne (51) reste ouverte ;
- évacuer le fluide de soufflage du récipient moulé ;
- évacuer le fluide de soufflage de la chambre de compensation (4) ;
- retirer le récipient moulé de la cavité du logement (2).

11. Procédé de moulage selon la revendication 10, dans lequel l'étape d'ouverture de ladite vanne (51) a lieu avant l'étape d'injection du fluide de soufflage à moyenne pression dans la paraison (100) ou après avoir injecté le fluide de soufflage à moyenne pression et avant d'injecter le fluide de soufflage à haute pression dans la paraison (100).

12. Procédé de moulage selon la revendication 10 ou 11, dans lequel l'étape de réglage rétroactif dudit intervalle de temps (Tₒₚₑₙ) a lieu en réponse au premier signal (pₘᵢₛ) détecté dans un même cycle de moulage de la paraison (100).

13. Procédé de moulage selon la revendication 10 ou 11, dans lequel l'étape de réglage rétroactif dudit intervalle de temps (Tₒₚₑₙ) a lieu après avoir retiré le récipient moulé de la cavité de logement (2).

14. Procédé de moulage selon l'une quelconque des revendications 10 à 13, dans lequel l'étape de réglage rétroactif dudit intervalle de temps (Tₒₚₑₙ) comprend :
- augmenter ledit intervalle de temps (Tₒₚₑₙ) en réponse à des valeurs du premier signal (pₘᵢₛ) qui sont inférieures à un premier seuil (Pₜₕ₁) ;
- réduire ledit intervalle de temps (Tₒₚₑₙ) en réponse à des valeurs du premier signal (pₘᵢₛ) qui sont supérieures à un deuxième seuil (Pₜₕ₂) ;
- maintenir ledit intervalle de temps (Tₒₚₑₙ) inchangé en réponse à des valeurs du premier signal (pₘᵢₛ) qui sont comprises entre ledit premier seuil (Pₜₕ₁) et ledit second seuil (Pₜₕ₂).
